# EUROPÄISCHE PATENTSCHRIFT

(11) **EP 2 139 772 B1**
(45) Veröffentlichungstag und Bekanntmachung des Hinweises auf die Patenterteilung: **21.11.2012**
(21) Anmeldenummer: 08734769.6
(22) Anmeldetag: 26.03.2008
(51) Int. Cl.: G01G 13/295, B65B 57/18, B65B 57/10, B65B 43/58, B65B 43/46, B65B 1/02, G01G 11/08, B65B 1/36, B65B 1/32, B65B 1/06

(54) **WIEGEVERFAHREN FÜR EINE FORM-, FILL- UND SEAL-MASCHINE**
WEIGHING METHOD FOR A FORMING, FILLING AND SEALING MACHINE
PROCEDE DE PESEE D'UNE MACHINE DE MISE EN FORME, DE REMPLISSAGE ET DE SCELLAGE

(30) Priorität: 26.03.2007 DE 102007014890
(43) Veröffentlichungstag der Anmeldung: 06.01.2010
(73) Patentinhaber: Windmöller & Hölscher KG, 49525 Lengerich (DE)
(72) Erfinder: KÖLKER, Martin, 49477 Ibbenbüren (DE); HUIL, Oliver, 48477 Hörstel (DE); SCHULTEN, Ludger, 48496 Hopsten (DE); KNOKE, Thomas, 33619 Bielefeld (DE); DIECKMANN, Franz-Josef, 49497 Mettingen (DE)
(74) Vertreter: Schneider, Bernd
(86) Internationale Anmeldenummer: PCT/EP2008/002368
(87) Internationale Veröffentlichungsnummer: WO 2008/116633

(56) Entgegenhaltungen:
- WO-A-2006/053627
- DE-A1- 2 606 518
- DE-A1- 3 523 502
- DE-A1- 4 033 582
- US-A- 2 367 775
- US-A- 3 537 511
- US-A- 3 561 643
- BIEBEL J: "KONTINUIERLICHES WAGEN UND DOSIEREN IN DER PROZESSAUTOMATISIERUNG" AUTOMATISIERUNGSTECHNISCHE PRAXIS - ATP, OLDENBOURG INDUSTRIEVERLAG, MUNCHEN, DE, Bd. 30, Nr. 4, 1. Januar 1988 (1988-01-01), Seiten 157-162, XP000028033 ISSN: 0178-2320

## Beschreibung

Die Erfindung betrifft ein Verfahren zum Herstellen, Befüllen und Verschließen von Kunststoffsäcken mit staubigem oder auch körnigem Schüttgut, sowie zum Verschließen der befüllten Säcke.

Eine derartige Vorrichtung ist beispielsweise aus der DE 93 01 355 U bekannt. Hier ist bereits eine Vorrichtung zur Herstellung, Befüllung und zum Verschließen einseitig offener, vorzugsweise mit Seitenfalten versehener Säcke aus thermoplastischem Kunststoff beschrieben, bei der eine erste Schweiß- und Trennstation zur Bildung des Sackes mit Bodennaht, eine Füllstation und eine zweite Schweißstation zum Verschließen des Sackes vorhanden sind. Im Allgemeinen werden diese Abfüllmaschinen in die FFS(Form Fill and Seal)-Kategorie eingeordnet.

Bei der Abfüllung staubiger Schüttgüter auf Maschinen der genannten Kategorie über Schwerkraft bzw. durch den freien Fall muss die vom Produkt verdrängte, staubige Luft aus dem Sack entweichen können. Bei dem Entweichen der Luft kommt es oft zu Kontaminationen in den oberen Randbereichen des Sackes. Bedingt durch die Kontamination mit Produktstaub kann der Sack mittels der bei dieser Art Verpackung im Allgemeinen üblichen Verschweißung nicht sicher verschlossen werden. Darüber hinaus belastet der Staub die Umwelt und muss gesondert abgesaugt werden.

Ferner führt die Abfüllung staubiger Güter nach dem beschriebenen bekannten Abfüllverfahren in der Regel zu einem deutlich überhöhten Produktvolumen bzw. zu einer deutlichen Reduzierung des Schüttgewichtes, da sich das Produkt durch den freien Fall stark mit Luft anreichert. Dieses wiederum führt dazu, dass zur Abfüllung des Produkts zunächst deutlich mehr Verpackungsmaterial gebraucht wird. Darüber hinaus muss die Luft auch wieder aus dem Sack entweichen können, da er sich sonst nicht stapeln bzw. lagern lässt.

Da das Entweichen der Luft in der Regel sehr lange dauert, kann die Entlüftung nicht bereits vor dem Verschließen des Sackes stattfinden. Der Sack muss daher eine Perforation aufweisen. Dieses belastet zusätzlich die Umwelt, da durch die Perforation der Verpackung die feinkörnigen, staubigen Produkte zum Teil nach außen gelangen können.

Mit der Zeit nimmt das Volumen des Schüttgutes wieder ab. Die Sackverpackung ist nun, gemessen am verpackten Schüttgutvolumen, deutlich zu groß. Solcherart befüllte Säcke lassen sich nur schlecht auf Paletten stapeln, da sie zu instabil sind. Die EP 1 459 981 A1 schlägt daher vor, den Einfüllstutzen eines Dosierorgans einer FFS-Maschine in die Öffnung eines Sackes einzuführen. Bei der WO 2006/053627 A1 wird die Relativbewegung zwischen Sack und Einfüllstutzen dagegen durch eine Bewegung des Sackes bewerkstelligt.

In beiden vorgenannten Druckschriften werden Dosierorgane vorgestellt, die Schnecken enthalten. Diese Schnecken fördern das Befüllgut in die Säcke. Die bevorzugte Förderrichtung in diesen Schnecken entspricht der Wirkrichtung der Schwerkraft. Durch die Schnecken unterbleibt ein freier Fall des Befüllguts in den Sack. Daher werden Schnecken oft zur Absackung von staubigen Befüllgütern verwendet. Ihre Verwendung ist jedoch - auch in Bezug auf die vorliegende Erfindung - keineswegs zwingend.

Neben der vorgenannten mechanischen Ausgestaltung der Sackbefüllungsorgane steht bei der Konzeption von FFS-Maschinen, die insbesondere staubige Güter abfüllen, der Wiegeprozess im Zentrum des Interesses. Bei FFS-Maschinen des Standes der Technik (siehe zum Beispiel DE 199 20 478 C2 und EP 1 201 539 B1), die in erster Linie weniger staubige Güter verfüllen, wird zunächst ein Fülltrichter mit dem Sollvolumen an Befüllmaterial für einen Sack befüllt. Das Sollvolumen beziehungsweise das Sollgewicht wird durch ein Wiegen des Fülltrichters ermittelt beziehungsweise geregelt. Wenn das Sollgewicht erreicht ist, wird die Abfüllöffnung am Boden des Fülltrichters geöffnet und das Füllmaterial strömt mit der Schwerkraft in den dafür vorgesehenen Sack. Insbesondere bei der Abfüllung staubiger Güter führt dieses unstetige Verfahren jedoch zu großer Staubentwicklung. Auch in der bereits genannten WO 2006/053627 A1 werden Wiegeverfahren für staubige Güter diskutiert. Generell ist zu sagen, dass solche Wiegeverfahren, wenn sie während der Befüllung durchgeführt werden, auch über längere Zeitspannen hinweg durchgeführt werden, da die Verfüllung staubigen Verfüllgutes ohne übergroße Staubentwicklung oft länger dauert als die Verfüllung einer gleichen Menge üblichen Verfüllgutes. Während dieser - oft längeren - Füllvorgänge können Fehler vorkommen. Zu diesen Fehlern kann ein Sackriss, ein Rutschen des Sackes aus den Haltezangen, ein Schneckenbruch oder ein Verstopfen der Schnecke (falls eine Schnecke verwendet wird) zählen. Es ist einzusehen, dass solche Fehler insbesondere bei staubigen Verfüllgütern zu einer großen Verschmutzung der Maschine und der Maschinenhalle und sogar zu Schäden am Maschinenpark führen können.

Daher lässt sich die Aufgabestellung der vorliegenden Erfindung folgendermaßen zusammenfassen: Der Abfüllprozess soll überwacht werden, wobei das Gewicht des Sackes möglichst genau geregelt werden kann und die Staubentwicklung klein gehalten werden soll. Die Aufgabe wird durch die Ansprüche 1, 12 und 13 gelöst.

Die vorliegende Erfindung sieht also unter anderem die Kontrolle und Regelung des Gewichtes des Sackes vor. Auch die Gewichtszunahme des Sackes pro Zeiteinheit gemessen wird in verschiedenen Zeitspannen gemessen. Liegt diese Gewichtszunahme außerhalb eines Ziel- oder Toleranzbereiches, so wird ein Warnsignal ausgegeben.

Dieses Warnsignal, das natürlich auch manuell (durch den Maschinenbediener) oder automatisch durch eine Steuereinrichtung, zu einem Regelvorgang führen kann, kann eine ganze Reihe von Fehlern oder Fehlermechanismen aufzeigen oder entlarven. Diese Lehre erscheint auch bei nicht staubigen Befüllgütern vorteilhaft anwendbar.

Die folgende Tabelle enthält Beispiele dafür, welche Messwerte oder welcher Messwertverlauf auf welche Fehler schließen lassen:

| **Fehler** | **Erkennungsroutine** | **Gefahrdungspotenzial** |
|---|---|---|
| Sackbruch | (Steigung zu gering oder negative Steigung) | Zustauben des Innenraums der Maschine |
| Ein Abrutschen des Sackes aus den Haltezangen | (negative Steigung) | Zustauben des Innenraums der Maschine |
| Störung in der Produktzuleitung | (Steigung zu gering) | Bildung eines explosionsfähigen |

Bei der optionalen Verwendung einer Schnecke zur Abfüllung des Befüllgutes treten unter anderem folgende Fehlercharakterisika hinzu:

| | | |
|---|---|---|
| Schneckenbruch | (Steigung zu gering) | z.B. Funkenbildung |
| Falsches Produkt | (Produktspezifische Steiqunq nicht okay) | diverse Gefahren |
| Ausfall des Antriebs | (Steigung zu gering) | diverse Gefahren |
| Verstopfen der Schnecke | (Steigung zu gering) | diverse Gefahren |
| Falsch eingestelltes Auslaufband (Bodenkontakt) | (Steigung zu gering) | Zustauben des Innenraums der Maschine |

Je nach der Art des Abfüllauftrages kann es vorteilhaft sein, am Ende, in der Mitte, am Anfang oder während des gesamten Abfüllprozesses die Überwachung der Gewichtszunahme des Sackes durchzuführen. Auch bei der Überwachung der Gewichtszunahme kann es vorteilhaft sein, hochfrequente Störungen derselben auszublenden. Diese können auch durch das Befüllorgan ausgelöst werden.

Während einer zweiten Zeitspanne während des Befüllvorganges ist es vorteilhaft, wenn die in der Steuervorrichtung ständig eintreffenden Messwerte für das Sackgewicht eben nicht zur Kontrolle oder Regelung des Sackgewichts eingesetzt werden. Auf diese Weise ist es möglich, den Einfluss störender Gewichtssignale auf den Befüllvorgang auszublenden. Hierbei kann die zweite Zeitspanne mit der ersten Zeitspanne, in der die Gewichtszunahme kontrolliert wird überlappen, sie kann kürzer, länger oder gleichlang wie oder als die erste sein und sie kann vor, während oder nach der ersten liegen.

Da die Kontrolle oder Regelung des Sackgewichtes während der zweiten Zeitspanne eben nicht durch eine Auswertung der Signale der Wägezellen erfolgt, ist es vorteilhaft, dieses volumetrisch oder empirisch zu ermitteln. Hierbei ist unter volumetrischer Gewichtsbestimmung beispielsweise zu verstehen, dass eine gemessene oder bekannte Zahl von Schneckenumdrehungen mit einer bekannten Füllgutförderrate pro Umdrehung multipliziert oder sonst wie mathematisch verknüpft wird, so dass das Gewicht oder das Volumen des zu einem Zeitpunkt in den Sack geförderten Materials ermittelt oder mit hinreichender Genauigkeit abgeschätzt werden kann. Am Ende einer solchen zweiten Zeitspanne mit volumetrischer Messung können die Wägezellen wieder die Bereitstellung von Messwerten übernehmen. Übrigens deckt der Begriff Wägezellen für die Zwecke alle geeigneten Gewichtssensoren wie Waagen und eben die Wägezellen selber ab. Im Allgemeinen versteht der Fachmann unter Wägezellen solche Gewichtssensoren, die elektrische Widerstände, die in Form einer Wheatstonebrücke angeordnet sind, enthalten. Die Widerstände ändern ihren ohmschen Widerstand, wenn sie verformt werden. Die Widerstände sind auf einem Element angebracht, das sich bei einer Gewichtsänderung verformt. Dementsprechend ändern sich die elektrischen Ausgangswerte der Wheatstonebrücke, die der Gewichtsmessung zugrunde liegen. Im Vergleich zu der volumetrischen Gewichtsmessung ist eine empirische Gewichtsmessung eine Messung oder Abschätzung, die nur oder größtenteils auf empirischen Werten beruht (z. B. während einer Zeit T wird ein Volumen V eines bestimmten Befüllmaterials abgefüllt).

Es ist vorteilhaft, wenn die Mündung des Befüllorgans während einer dritten Zeitspanne unterhalb des Befüllgutspiegels liegt. In der Regel wird dies ganz zu Beginn des Befüllprozesses (leerer Sack) nicht der Fall sein können. Tests haben jedoch gezeigt, dass diese Maßnahme (die Unterspiegelbefüllung) die Nebelbildung beim Befüllen des Sackes zurückführt. Eine Überschneidung zwischen zweiter (keine Gewichtsregelung nach Wägezellensignalen) und dritter Zeitspanne (Unterspiegelbefüllung) ist vorteilhaft. Die Relativbewegung von Befüllorgan und Befüllgut ist geeignet, bei der Unterspiegelbefüllung die Gewichtsmessung zu stören. Diese Störungen unterbleiben jedoch in einer zweiten Zeitspanne nach der obigen Definition, da während einer solchen Zeitspanne die Gewichtsmessung eben nicht zur Gewichtskontrolle oder -regelung herangezogen wird. Eine Alternative zu dieser Maßnahme ist die Ausblendung der Störsignale durch einen geeigneten Filter. Es hat sich gezeigt, dass die Störsignale, die von dem Befüllorgan erzeugt werden, relativ hochfrequent sind, so dass diese Maßnahme vorteilhaft ist.

Eine explizite Nutzung der Signale der Wägezellen zur Gewichtsregelung wird im Rahmen der vorliegenden Erfindung nicht ausgeschlossen und kann in einer vierten Zeitspanne, die wieder in Lage und Dauer beliebig zu den anderen Zeitspannen gestaltet sein kann, vorgenommen werden. Vorteilhaft ist diese vierte Zeitspanne am Ende des Befüllprozesses.

In einer fünften Zeitspanne, die wieder in Lage und Dauer beliebig zu den anderen Zeitspannen gestaltet sein kann, kann zum Vorteil des Gesamtprozesses die Befüllung vorgenommen werden, während sich der Ausgang des Befüllorgans oberhalb des Befüllgutspiegels befindet. Diese Phase der Befüllung kann zum Beispiel ebenfalls am Ende des Befüllprozesses stehen und dazu genutzt werden, eine feinfühlige und genaue Dosierung des Befüllgutes zu ermöglichen.

Als staubige Güter, deren Abfüllung vorteilhafterweise mit einem erfindungsgemäßen Verfahren vorgenommen wird, kommen unter anderem Zement, Titandioxid und alle möglichen Kunststoffstäube in betracht. Allgemein dürfte der Fachmann unter staubigen Gütern Schüttgüter verstehen, die sich an einer FFS-Maschine eben nicht abfüllen lassen, wenn nicht ein spezielles Abfüllverfahren, das sich oft Schnecken zur Führung des Schüttgutes bedient, verwendet wird.

Gegenstand der Erfindung sind auch Vorrichtungen zur automatisierten Durchführung des Verfahrens beziehungsweise der unterschiedlichen in dieser Druckschrift offenbarten Verfahren. Derartige Vorrichtungen werden in der Regel von Steuervorrichtungen gesteuert und/oder geregelt, die mit gespeicherten Befehlsfolgen, die die vorstehend beschriebenen Verfahren anordnen und/oder überwachen, beaufschlagt sind. Diese Steuerprogramme sind entweder auf Bestandteilen der Steuervorrichtung oder auf anderen Datenträgern wie CDs oder DVDs gespeichert. Auch eine Versendung von Teilen oder der Gesamtheit solcher Programme erscheint möglich. Für alle vorstehend genannten und bekannten Möglichkeiten oder Medien Daten und Befehlsfolgen zu speichern und/oder zu transportieren wird im Rahmen dieser Anmeldung der Begriff "Datenset" gebraucht. Dieser Begriff umschließt auch die Versendung der betreffenden elektronisierten Informationen über Netzwerke zum Beispiel per E-Mail.

Weitere Ausführungsbeispiele der Erfindung gehen aus der gegenständlichen Beschreibung und den Ansprüchen hervor.

Die einzelnen Figuren zeigen:

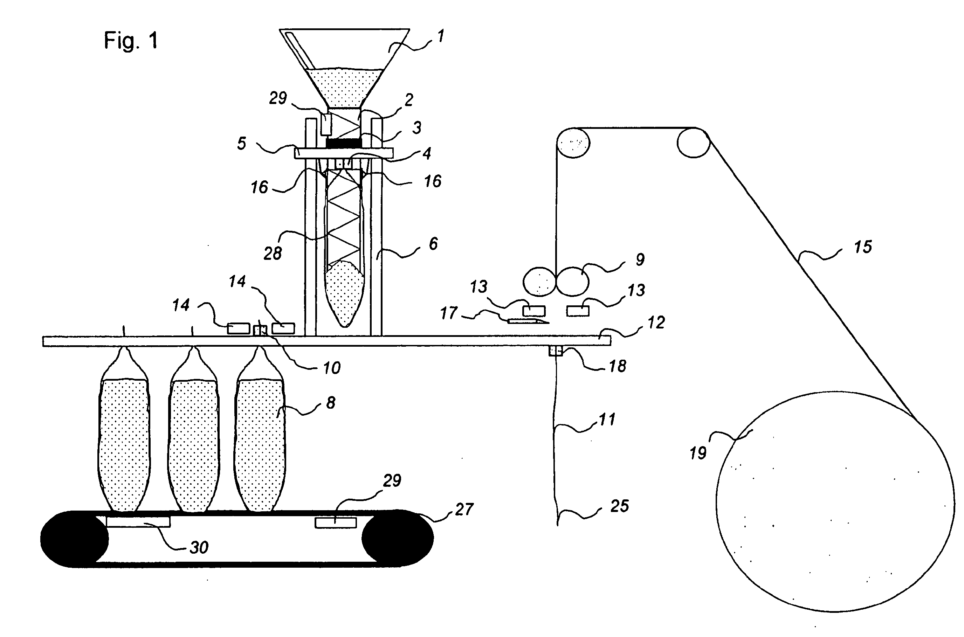

- Fig. 1: Seitenansicht einer FFS-Maschine

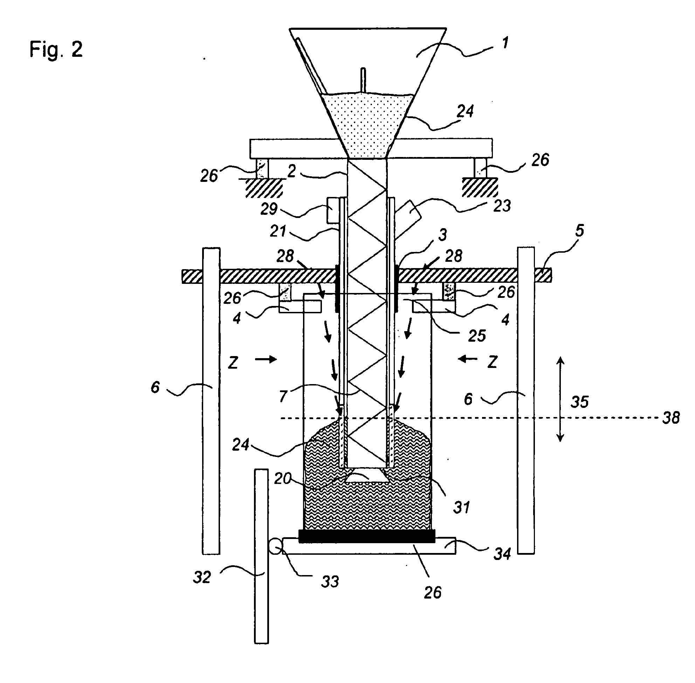

- Fig. 2: Detailansicht von Figur 1
- Fig. 3: den Verlauf des Sackgewichtes, gegen die Zeit aufgetragen (1. Ausführungsbeispiel)
- Fig. 4: den Verlauf des Sackgewichtes, gegen die Zeit aufgetragen (2. Ausführungsbeispiel)
- Fig. 5: den Verlauf des Sackgewichtes, gegen die Zeit aufgetragen (3. Ausführungsbeispiel)
- Fig. 6: den Verlauf der Sackgewichtszunahme, gegen die Zeit aufgetragen (3. Ausführungsbeispiel)

Eine Schlauchfolienbahn 15, vorzugsweise mit eingelegten Seitenfalten, wird zunächst von einem Vorzugrollensystem 9 in ein horizontal bewegliches Transportmittel, beispielsweise ein Greiferpaar 18 gefördert.

Die Folienbahn 15 wird, nachdem der Vorzug den Abschnitt entsprechend der gewünschten Sacklänge vorgezogen hat, vom Messer 17 durchgeschnitten. Gleichzeitig erfolgt die Bodenschweißung 13. Der am unteren Ende verschlossene Leersack 11 wird einem horizontal verschieblichen Transportmittel, beispielsweise einem Greifer 18, übergeben und zur Füllstation transportiert.

In der Füllstation übernimmt ein weiteres Transportmittel 4, welches aus 3,4,5 besteht, den Sackabschnitt. Der Leersack wird nun mit einem Saugersystem 16 geöffnet. Dazu wird der bzw. die Greifer 4 in Z-Richtung (sackeinwärts) bewegt. Der Anschlussstutzen des Transportsystems 3 wird in den Sack bewegt und schützt die Sackinnenflächen vor der Verschmutzung durch eventuelle Produktanhaftungen am Dosierrohr 2,21.

Der geöffnete Sack wird vom Transportsystem 3,4,5 über das Dosierrohr 2,21 gezogen, bis sich das untere Ende des Sackes ungefähr in Höhe der Füllgutaustrittsöffnung 31 befindet. Die Sackbodenunterstützungseinrichtung 32,33,34 wird bei dem gezeigten Ausführungsbeispiel unter den Sackboden gefahren. Eine Sackbodenunterstützungseinrichtung 32,33,34 ist jedoch nicht unbedingt erforderlich. Vielmehr wird die Relativbewegung des Sackes gegenüber dem Befüllorgan 2,21 hauptsächlich dadurch hervorgerufen, dass der Rahmen 5 entlang der Führung 6 fährt. Dies wird durch den Doppelpfeil 35 dargestellt. Bei diesem Ausführungsbeispiel der Erfindung wird also der Sack gegenüber dem Befüllorgan 2,21 bewegt. Denkbar ist es natürlich auch, die Relativbewegung zwischen Sack 8 und Dosierorgan durch eine Bewegung des Dosierorgans oder gar durch eine Bewegung von Sack 8 und Dosierorgan 2 herbeizuführen. In der Regel ist es hierbei ausreichend, wenn der Sack hierbei durch greiferartige Transportmittel 4 an seinem oberen Ende gehalten wird. Die erwähnte Sackbodenunterstützungseinrichtung 32,33,34 bietet optionalen, zusätzlichen Schutz vor einem Riss des gerade geschweißten Sackbodens.

Das Verschlussrohr 21 wird angehoben und gibt die Produktaustrittsöffnung 31 frei. Das Produkt/Schüttgut 24 wird in den Sack gefüllt. Währenddessen senkt das Transportsystem 3,4,5 den Sack in der Weise ab, dass sich die Produktaustrittsöffnung 31 jederzeit unterhalb des Füllspiegels befindet. Noch vor dem Ende der Dosierung des Produktes/Schüttguts 24 kann sich die Produktaustrittsöffnung 31 jedoch zumindest einmal oberhalb des Füllspiegels 38 befinden. Nach Ende der Befüllung wird das Verschlussrohr 21 abgesenkt und verschließt die Produktaustrittsöffnung 31, indem sie Kontakt mit dem Verschluss 20 aufnimmt. Der Anschlussstutzen wird aus dem Sack gezogen. Der bzw. die Greifer 4 des Transportsystems 3,4,5 wird bzw. werden nun entgegen der Z-Richtung (sackauswärts) bewegt und ziehen den Öffnungsbereich am oberen Rand 25 des zuvor geöffneten Sacks stramm. Ein weiteres Transportmittel übernimmt den befüllten Sack 8. Mittels der Verschließeinrichtung 14 wird nun der obere Rand des Sacks 25 verschlossen. Zusammen mit dem Dosiervorgang kann bei Bedarf durch den im Verschlussrohr 21 integrierten Filter abgesaugt werden. Das erforderliche Vakuum wird über den Stutzen 23 eingeleitet. Die Integration des Filters in das Verschlussrohr erlaubt eine sehr kompakte Bauform, die es ermöglicht, auch relativ kleine Säcke abzufüllen. Das Absaugen der Luft führt gewissermaßen zu einer Verdichtung des Schüttguts. Hierdurch kann eine der Produktmenge angemessene Sackgröße gewählt werden.

Dieser Effekt der Produktverdichtung kann durch den zusätzlichen Einsatz von Vibrationserzeugern/ Klopfern 29 noch verstärkt werden. Hier ist es vorteilhaft, das Dosierrohr 2,21 mittels eines Vibrationserzeugers 29 in Schwingung zu versetzen, da es sich während der Befüllung zumindest mit Teilen seiner Mantelfläche innerhalb des Produktes befindet. Die Schwingungen werden vom Dosierrohr 2,21 an das Befüllgut 24 übertragen, in dem dann eine Verdichtung stattfindet. Ein weiterer Vorteil des "vibrierenden Dosierrohrs" 2,21 ist, dass die Bildung von Produktanhaftungen am Dosierrohr 2,21 dadurch weitgehend vermieden wird. Der Rüttler 29 könnte auch an der "Sackbodenunterstützungsvorrichtung" 34 angeordnet sein!

Eine besonders vorteilhafte Ausführung des Verfahrschlittens ist es, den Rahmen 5 mitsamt Stutzen 3, Transportmittel 4 sowie der Aufsaugung 16 auf Sensoren zu lagern. Die Sensoren senden ihr Signal an eine Wägeelektronik, welche letztendlich den Dosiervorgang steuert.

Zu erwähnen ist noch die Führung bzw. Stütze 6, die den Rahmen 5 und damit die Transportmittel 4 trägt. In dem Dosierorgan beziehungsweise Rohr 2 befindet sich eine Schnecke 7, mit der Befüllmaterial 24 aus dem Trichter 1 ohne große Staubbildung in den Sack 8 gefördert werden kann. Die verschiedenen Sensoren 26 (v. a. Wägesensoren beziehungsweise Wägezellen) deuten vorteilhafte Orte zum Anbringen solcher Sensoren an. Das Transportband 27 transportiert die befüllten Säcke (8). In der Umgebung desselben sind die Kontrollwaage 30 und der Vibrationserzeuger 29 angebracht.

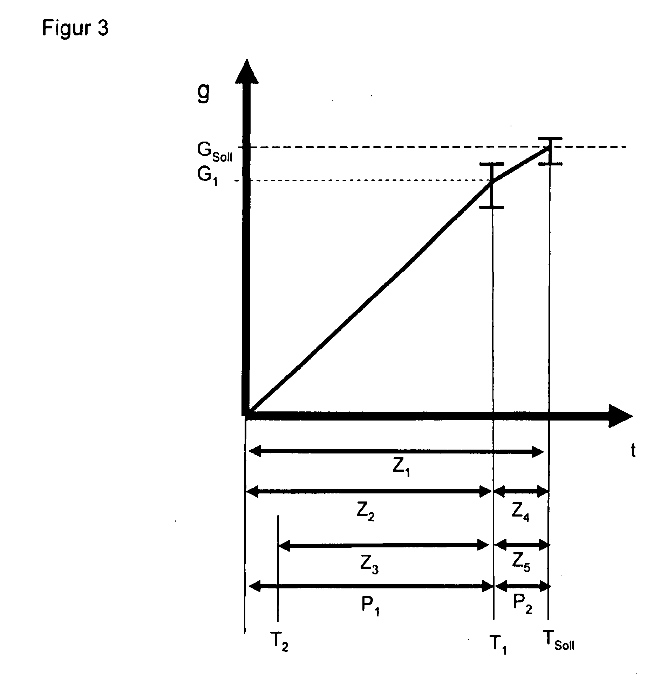

In Figur 3 ist der zeitliche Verlauf der Gewichtszunahme eines Sackes bei der Ausführung eines erfindungsgemäßen Verfahrens dargestellt. Auf der senkrechten Achse ist das Sackgewicht g und auf der waagrechten Achse die Zeit t aufgetragen. Mit der ersten Phase P₁ der Sackbefüllung fallen in diesem Ausführungsbeispiel die Zeitspannen Z₂ (volumetrische oder empirische Gewichtskontrolle oder Regelung) und Z₃ (Unterspiegelbefüllung) zusammen. In dieser Phase P₁ fallen also Störsignale bei der Gewichtskontrolle nicht auf, da die Gewichtssignale der Wägezellen 26 eben bei der hier volumetrischen oder empirischen Gewichtskontrolle ignoriert werden. Störsignale werden hier vor allem durch das Befüllorgan 2,21 hervorgerufen, dessen Füllgutaustrittsöffnung 31 sich ja in der Zeitspanne Z₃, die hier mit der Phase 1 und Zeitspanne Z₂ zusammenfällt, unterhalb des Befüllgutspiegels 38 befindet. In der Regel wird das Befüllorgan jedoch ganz zu Beginn der Befüllung oberhalb des Befüllgutspiegels 38 sein, da eben noch kein oder noch zu wenig Befüllgut im Sack 8 vorhanden ist. Diesem Umstand wird hier dadurch Rechnung getragen, dass die Zeitspanne Z₃ eben nicht zum Zeitpunkt 0, sondern zum Zeitpunkt T₂ beginnt.

Mit dem Erreichen des Zeitpunktes T₁ beginnt die Phase P₂ der Sackbefüllung. In der Regel wird man bei diesem Ausführungsbeispiel diesen Zeitpunkt als erreicht ansehen, wenn man aufgrund der volumetrischen Messung oder Abschätzung des Sackgewichtes davon ausgehen kann, dass ein bestimmter Anteil G₁ des Sacksollgewichtes G_{Soll} erreicht ist. Dieser Anteil kann 95% sein. Im vorliegenden Ausführungsbeispiel (nach Figur 3) ändern sich nun einige Parameter der Sackbefüllung: Das Sackgewicht wird tatsächlich über die Auswertung der Wägezellensignale überwacht und die Befüllung erfolgt während sich das Befüllorgan 2,21 zur Gänze oberhalb des Befüllgutspiegels 38 befindet. Hierdurch wird die Güte der Gewichtsmessungen verbessert. Die Überwachung der Gewichtszunahme, um gegebenenfalls ein Alarmsignal bereitzustellen wird bei diesem Ausführungsbeispiel während des ganzen Befüllvorgangs vorgenommen. Der Befüllvorgang endet, wenn das Sollgewicht G_{Soll} erreicht ist. Hier erfolgt die Beendigung automatisch durch die nicht gezeigte Steuervorrichtung, wenn die Wägezellen 26 die gewünschten Signale an die Steuervorrichtung melden. Die Abfüllgeschwindigkeit ist in Phase 2 niedriger als in Phase 1.

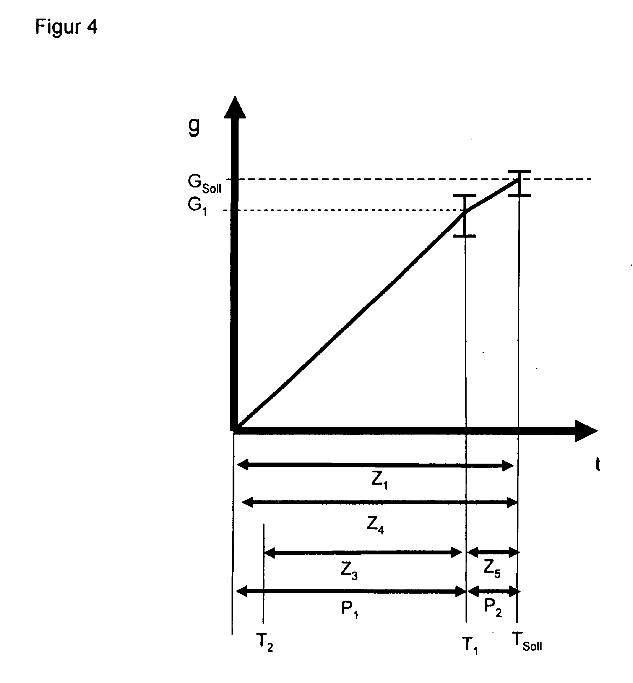

Eine andere Variante dieses Verfahrens wird in Figur 4 veranschaulicht. Es genügt an dieser Stelle, die Unterschiede zu dem in Figur 3 dargestellten Ausführungsbeispiel zu nennen:
Die Zeitspanne Z₄, in der die Signale der Wägezellen auch zur Kontrolle/Regelung des Sackgewichts genutzt werden, dauert während des gesamten Befüllvorgangs an.
Es findet keine volumetrische Gewichtskontrolle statt. Es ist vorteilhaft, wenn die Störsignale, die insbesondere während der Unterspiegelbefüllung (Z₃) entstehen durch Filter auf den Messsignalen beseitigt werden.

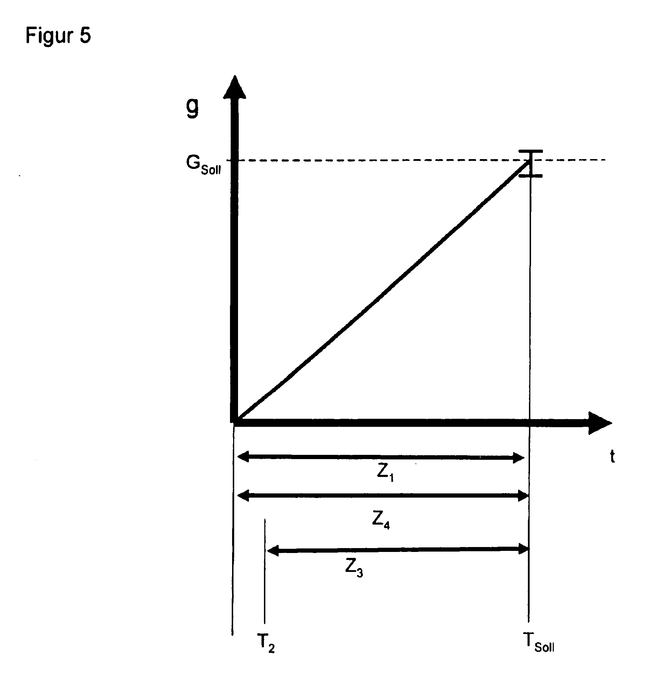

In Figur 5 wird auf verschiedene Phasen des Abfüllprozesses verzichtet. Während des gesamten Abfüllprozesses wird das Gewicht des Sackes zur Gewichtskontrolle/- regelung verwendet (Zeitspanne Z₄). Sobald genug Material im Sack ist wird im Unterspiegelverfahren befüllt (Zeitspanne Z₃). Eine Reduktion der Sackgeschwindigkeit erfolgt nicht. Diese Maßnahmen können unter anderem bei hohen Anforderungen an die Filterung gelöst werden.

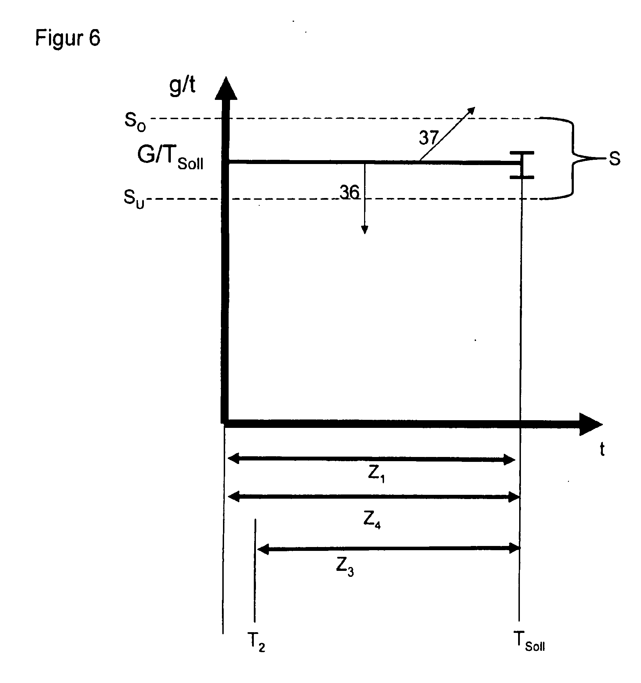

In Figur 6 zeigt wie bei dem in Figur 5 dargestellten Ausführungsbeispiel die erste Ableitung des Gewichts nach der Zeit g/t sich während des Befüllvorgangs verhält. Sie ist konstant. Die geschweifte Klammer S gibt den Sollbereich an. Dieser muss nicht unbedingt symmetrisch um den Sollwert G/T_{Soll} verlaufen. Der Sollbereich S hat eine untere S_{U} und eine obere S_{O} Grenze. Die Pfeile 36, 37 deuten an, dass der Wert g/t den Sollbereich verlassen kann, wenn ein Fehler auftritt. Ein Verlauf der Gewichtsänderung gemäß dem Pfeil 36 kann in Folge eines Sackrisses auftreten. Wenn der Sollbereich S verlassen wird, wird ein Alarm ausgelöst, der Maßnahmen des Maschinenpersonals und/oder der Steuervorrichtung auslösen kann.

Allgemein haben Tests gezeigt, dass noch weitere technische Merkmale in allen erfindungsgemäßen Vorrichtungen und/oder Verfahren vorteilhaft einsetzbar sind:
a) Das Sollgewicht G_{Soll} sollte erreicht werden, während die Relativbewegung zwischen Sack 8 und Dosierorgan 2 noch andauert. Wie bereits mehrfach ausgeführt kann diese Relativbewegung durch eine Bewegung eines oder beider dieser beiden Elemente 2, 8 herbeigeführt werden. Es ist auch möglich, dass die Relativbewegung bereits unmittelbar nach dem Zeitpunkt verlangsamt oder beendet wird, an dem das letzte wirklich noch verwertete Messsignal der Wägezellen zustande kommt. Dieses kann vor dem Erreichen des Sollgewichtes sein und die Zeitspanne zwischen diesem letzten Messsignal und dem Abbruch der Sackbefüllung bei Erreichen des Sollgewichts G_{Soll} kann aus der Kenntnis der Abfüllgeschwindigkeit allein durch Zeitmesssung und Berechnung gewonnen werden. Alternativ kommt wieder eine kurze volumetrische Messphase Z₂ in Betracht. Wichtig ist, dass gerade die wichtigen letzten Messwerte der Wägezellen nicht durch das Abbrechen der Bewegung, die ja positive oder negative Beschleunigungen hervorruft, verfälscht werden. Schließlich ist die Gewichtsmessung nach der Formel F=gm eine Kraftmessung und die Kraft ist mit der Beschleunigung über das Grundgesetz der Mechanik F=ma verknüpft. Trotz dieser Ausführung erscheint es möglich, insbesondere bei einer Überspiegelbefüllung, auch oben eine Relativbewegung gut zu messen.
b) Die Relativbewegung zwischen Sack 8 und Dosierorgan 2 sollte während der Befüllung gleichförmig sein. Alternativ ist es auch möglich, wenn zu Beginn des Befüllprozesses eine Beschleunigungsphase stattfindet. Wichtig ist, dass die Relativbewegung gleichförmig ist, während die Wägezellensignale zur Gewichtskontrolle ausgewertet werden (Zeitspanne Z4). Bei gleichförmigen Bewegungen treten eben keine Beschleunigungen des teilweise befüllten Sackes 8 auf, die die Gewichtsmessung verfälschen würden. Eine Alternative zu dieser Vorgehensweise besteht darin, die Relativgeschwindigkeit aufzuzeichnen, etwaige Beschleunigungen zu ermitteln und die durch diese Beschleunigungen entstehenden Fehler gemäß der Formel F=ma aus dem Messwert herauszurechnen. Hierzu sollte auch das augenblickliche Gewicht des Sackes bekannt sein.

| **Bezugszeichenliste** | |
|---|---|
| 1 | Trichter |
| 2 | Dosierorgan |
| 3 | Anschlussstutzen |
| 4 | Transportmittel |
| 5 | Rahmen |
| 6 | Führung |
| 7 | Schnecke |
| 8 | Befüllter Sack |
| 9 | Vorzugrollen |
| 10 | Transportmittel |
| 11 | Leersack |
| 12 | Führung |
| 13 | Bodenschweißung |
| 14 | Kopfnahtschweißung |
| 15 | Schlauchfolienbahn |
| 16 | Sauger |
| 17 | Messer |
| 18 | Transportmittel |
| 19 | Abwickelvorrichtung |
| 20 | Verschluss |
| 21 | Verschlussrohr mit Filter |
| 22 | Filter |
| 23 | Stutzen |
| 24 | Produkt/Schüttgut |
| 25 | Oberer Rand des Sackes |
| 26 | Sensoren |
| 27 | Transportband |
| 28 | Gerichtete Strömung |
| 29 | Vibrationserzeuger |
| 30 | Kontrollwaage |
| 31 | Füllgutaustrittsöffnung |
| 32 | Führung |
| 33 | Gelenk |
| 34 | Sackbodenunterstützung |
| 35 | Doppelpfeil (Bewegung des Rahmens 5 mit dem Sack 8) |
| 36 | Pfeil (Abweichung vom Sollwert, Sackriss) |
| 37 | Pfeil (Abweichung vom Sollwert) |
| 38 | Füllgutpegel |
| P₁ | Erste Phase des Befüllvorgangs bis T1 |
| P₂ | Zweite Phase des Befüllvorgangs bis zum Erreichen von G_{Soll} |
| Z₁ | Erste Zeitspannung (Messung der Gewichtszunahme) |
| Z₂ | Zweite Zeitspanne (volumetrisch oder empirisch) |
| Z₃ | Dritte Zeitspanne (Unterspiegelbefüllung) |
| Z₄ | Vierte Zeitspanne (Überwachung des Sackgewichts) |
| Z₅ | Fünfte Zeitspanne (Überspiegelbefüllung) |
| S_{O} | Obere Grenze des Sollbereichs |
| S_{U} | Untere Grenze des Sollbereichs |
| S | Sollbereich der Gewichtszunahme g/t |
| g/t | Gewichtszunahme beziehungsweise -änderung pro Zeiteinheit, oder auch erste Ableitung des Sackgewichtes nach der Zeit |

## Patentansprüche

1. Verfahren zum Formen, Befüllen und Schließen von Säcken (8, 11), welches zumindest folgende Merkmale aufweist:
- die Bildung eines Sackes (8, 11), wobei Säcke (8, 11) aus Schlauchstücken gebildet werden,
- die Befüllung eines Sackes (8), bei der die Säcke (8) gehalten und mit einem Befüllorgan (2) befüllt werden,
- das Verschließen der Sacköffnung (25),
- das Wiegen der Säcke (8),
- wobei während einer ersten Zeitspanne (Z₁) während des Befüllvorganges des Sackes (8) die Gewichtszunahme desselben überprüft wird
- und ein Alarmsignal bereitgestellt wird, wenn die Gewichtszunahme pro Zeiteinheit (g/t) außerhalb eines Zielbereichs (S) liegt,
**dadurch gekennzeichnet,**
- **dass** während einer zweiten Zeitspanne (Z₂) während des Befüllvorganges des Sackes (8) die Signale der Wägezellen (26) nicht zur Kontrolle und/oder Regelung des Gewichtes (g) des Sackes (8) genutzt werden
- **dass** zumindest während einer dritten Zeitspanne (Z₃), die Mündung (31) des Befüllorgans (2) unterhalb des Befüllgutstands (38) in dem zu befüllenden Sack liegt
- **dass** zumindest während einer vierten Zeitspanne (Z₄) während der Sackbefüllung die Signale der Wägezellen (26) zur Überwachung des Sackgewichtes (g) genutzt werden.
- und **dass** zumindest während einer fünften Zeitspanne (Z₅), die zumindest teilweise innerhalb der vierten Zeitspanne (Z₄) liegt, in der die Signale der Wägezellen (26) zur Überwachung des Sackgewichtes (g) genutzt werden, die Mündung (31) des Befüllorgans (2) oberhalb des Befüllgutstands (38) in dem zu befüllenden Sack (8) liegt.

2. Verfahren nach Anspruch 1,
**dadurch gekennzeichnet, dass**
die Zeitspanne (Z₁) während des Befüllvorganges, während der die Gewichtszunahme (g/t) des Sackes (8) überprüft wird, den ganzen Befüllvorgang abdeckt.

3. Verfahren nach Anspruch 1,
**dadurch gekennzeichnet, dass**
die Zeitspanne (Z₁) während des Befüllvorganges, während der die Gewichtszunahme (g/t) des Sackes (8) überprüft wird, einen Zeitraum am Ende des Befüllvorgangs abdeckt.

4. Verfahren nach Anspruch 1,
dadurch gekennzeichet, dass
die Zeitspanne (Z₁) während des Befüllvorganges, während der die Gewichtszunahme (g/t) des Sackes (8) überprüft wird, einen Zeitraum am Anfang des Befüllvorgangs abdeckt.

5. Verfahren nach dem vorstehenden Anspruch,
**dadurch gekennzeichnet, dass**
die Gewichtszunahme (g/t) des Sackes (8) während der zweiten Zeitspanne (Z₂) volumetrisch oder empirisch bestimmt wird.

6. Verfahren nach dem vorstehenden Anspruch,
**dadurch gekennzeichnet, dass**
die Gewichtszunahme (g/t) des Sackes (8) während der zweiten Zeitspanne (Z₂) volumetrisch bestimmt wird, und dass
die Steuervorrichtung zur volumetrischen Überwachung des Gewichtes die Schneckendrehzahl des Dosierorgans (2) berücksichtigt.

7. Verfahren nach einem der drei vorstehenden Ansprüche,
**dadurch gekennzeichnet, dass**
die dritten Zeitspanne (Z₃), in der die Mündung (31) des Befüllorgans (2) unterhalb des Befüllgutstands (38) in dem zu befüllenden Sack liegt, vorzugsweise innerhalb der zweiten Zeitspanne (Z₂) liegt,

8. Verfahren nach dem vorstehenden Anspruch,
**dadurch gekennzeichnet, dass**
die durchschnittliche Abfüllgeschwindigkeit (g/t) während der fünften Zeitspanne (Z₅) niedriger ist als während der dritten (Z₃) und/oder vierten (Z₄) Zeitpanne.

9. Verfahren nach einem der beiden vorstehenden Ansprüche,
**dadurch gekennzeichnet, dass**
die fünfte Zeitspanne (Z₅) am Ende des Abfüllprozesses eines Sackes (8) steht.

10. Verfahren nach einem der vorstehenden Ansprüche,
**dadurch gekennzeichnet, dass**
staubige Güter wie Zement, feinkörnige Kohlenwasserstoffe oder Titandioxid abgefüllt werden.

11. Verfahren nach einem der vorstehenden Ansprüche,
**dadurch gekennzeichnet, dass**
Störungen bei der Messung des Gewichtes (g) und/oder der Gewichtszunahme (g/t) des Sackes (8) die - vorzugsweise während die Mündung (31) des Befüllorgans (2) unterhalb des Füllgutspiegels (38) liegt - von dem Befüllorgan (2) ausgelöst werden, durch eine Filterung der Signale der Messorgane (26) ausgeblendet werden.

12. Form-, Fill- und Seal-Maschine, welche zumindest folgende Merkmale aufweist:
- eine Sackbildungsvorrichtung (13, 17, 18), In welcher Säcke (11) aus Schlauchstücken gebildet werden,
- eine Befüllvorrichtung (2, 4, 5), in welcher die Säcke (8) gehalten und mit einem Befüllorgan (2) befüllt werden,
- eine Verschließvorrichtung (14), welche die Sacköffnung (25) wieder verschließt,
- eine Wiegevorrichtung (26) zum Wiegen der Säcke (8),
- eine Steuervorrichtung, welche derart mit einem Steuerprogramm beaufschlagt ist (S6 Z10ff), dass sie das folgende Verfahren durchführt:
- die Steuervorrichtung überprüft zumindest während einer ersten Zeitspanne (Z₁) während des Befüllvorganges des Sackes (8) die Gewichtszunahme desselben und stellt ein Alarmsignal bereit, wenn die Gewichtszunahme (g/t) pro Zeiteinheit außerhalb eines Zielbereichs (S) liegt,
- **dadurch gekennzeichnet,**
- **dass** die Steuervorrichtung während einer zweiten Zeitspanne (Z₂) während des Befüllvorganges des Sackes (8) die Signale der Wägezellen (26) nicht zur Kontrolle und/oder Regelung des Gewichtes (g) des Sackes (8) nutzt,
- **dass** die Steuervorrichtung die Relativbewegung zwischen Sack und Befüllorgan derart steuert, dass zumindest während einer dritten Zeitspanne (Z₃), die Mündung (31) des Befüllorgans (2) unterhalb des Befüllgutstands (38) in dem zu befüllenden Sack liegt,
- **dass** die Steuervorrichtung zumindest während einer vierten Zeitspanne (Z₄) während der Sackbefüllung die Signale der Wägezellen (26) zur Überwachung des Sackgewichtes (g) nutzt
- und **dass** die Steuervorrichtung zumindest während einer fünften Zeitspanne (Z₅), die zumindest teilweise innerhalb der vierten Zeitspanne (Z₄) liegt, in der die Signale der Wägezellen (26) zur Überwachung des Sackgewichtes (g) genutzt werden, die Relativbewegung zwischen Sack und Befüllorgan derart steuert, dass die Mündung (31) des Befüllorgans (2) oberhalb des Befüllgutstands (38) in dem zu befüllenden Sack (8) liegt..

13. Datenset zur Beaufschlagung der Steuervorrichtung einer geeigneten FFS-Maschine mit Steuerbefehlen beziehungsweise Softwarebestandteilen zur automatisierten Durchführung des folgenden Verfahrens:
- die Steuervorrichtung überprüft zumindest während einer ersten Zeitspanne (Z₁) während des Befüllvorganges des Sackes (8) die Gewichtszunahme desselben und stellt ein Alarmsignal bereit, wenn die Gewichtszunahme (g/t) pro Zeiteinheit außerhalb eines Zielbereichs (S) liegt,
- **dadurch gekennzeichnet,**
- **dass** die Steuervorrichtung während einer zweiten Zeitspanne (Z₂) während des Befüllvorganges des Sackes (8) die Signale der Wägezellen (26) nicht zur Kontrolle und/oder Regelung des Gewichtes (g) des Sackes (8) nutzt,
- **dass** die Steuervorrichtung die Relativbewegung zwischen Sack und Befüllorgan derart steuert, dass zumindest während einer dritten Zeitspanne (Z₃), die Mündung (31) des Befüllorgans (2) unterhalb des Befüllgutstands (38) in dem zu befüllenden Sack liegt,
- **dass** die Steuervorrichtung zumindest während einer vierten Zeitspanne (Z₄) während der Sackbefüllung die Signale der Wägezellen (26) zur Überwachung des Sackgewichtes (g) nutzt
- und **dass** die Steuervorrichtung zumindest während einer fünften Zeitspanne (Z₅), die zumindest teilweise innerhalb der vierten Zeitspanne (Z₄) liegt, in der die Signale der Wägezellen (26) zur Überwachung des Sackgewichtes (g) genutzt werden, die Relativbewegung zwischen Sack und Befüllorgan derart steuert, dass die Mündung (31) des Befüllorgans (2) oberhalb des Befüllgutstands (38) In dem zu befüllenden Sack (8) liegt.

## Claims

1. Method for forming, filling and sealing sacks (8, 11),
having at least the following features:
- forming a sack (8, 11), wherein sacks (8, 11) are formed from pieces of tubing,
- filling a sack (8), wherein the sacks (8) are held and filled with a filling element (2),
- sealing the opening of the sack (25),
- weighing the sacks (8),
- wherein, in the course of a first time span (Z₁) during the filling process of the sack (8), the increase in weight of said sack (8) is monitored,
- and there is provision for an alarm signal, if the increase in weight lies outside a target region (S) for each unit of time (g/t),
**characterised in that**,
- in the course of a second time span (Z₂) during the filling process of the sack (8), the signals of the weighing cells (26) are not used for controlling and/or regulating the weight (g) of the sack (8),
- at least in the course of a third time span (Z₃), the opening (31) of the filling element (2) lies below the filling limit (38) in the sack which is to be filled,
- at least in the course of a fourth time span (Z₄), while the sack is being filled, the signals of the weighing cells (26) are used to monitor the weight (g) of the sack,
- and at least in the course of a fifth time span (Z₅), which lies at least partially within the fourth time span (Z₄),
wherein the signals of the weighing cells (26) are used to monitor the weight (g) of the sack, the opening (31) of the filling element (2) lies above the filling limit (38) in the sack(8) which is to be filled.

2. Method according to claim 1,
**characterised in that**,
the time span (Z₁) during the filling process, during which the increase in weight (g/t) of the sack (8) is monitored, covers the entire filling process.

3. Method according to claim 1,
**characterised in that**,
the time span (Z₁) during the filling process, during which the increase in weight (g/t) of the sack (8) is monitored, covers a period of time at the end of the filling process.

4. Method according to claim 1,
**characterised in that**,
the time span (Z₁) during the filling process, during which the increase in weight (g/t) of the sack (8) is monitored, covers a period of time at the start of the filling process.

5. Method according to the preceding claim,
**characterised in that**,
the increase in weight (g/t) of the sack (8) is determined volumetrically or empirically during the second time span (Z₂).

6. Method according to the preceding claim,
**characterised in that**,
the increase in weight (g/t) of the sack (8) is determined volumetrically during the second time span (Z₂), and **in that**
the control device for volumetric monitoring of the weight takes into account the screw revolution of the filling element (2).

7. Method according to one of the three preceding claims,
**characterised in that**,
the third time span (Z₃), wherein the opening (31) of the filling element (2) lies below the filling limit (38) of the sack which is to be filled, preferably lies within the second time span (Z₂).

8. Method according to the preceding claim,
**characterised in that**,
the average filling speed (g/t) during the fifth time span (Z₅) is less than during the third (Z₃) and/or fourth (Z₄) time span.

9. Method according to one of the two preceding claims,
**characterised in that**,
the fifth time span (Z₅) occurs at the end of the filling process of a sack (8).

10. Method according to one of the preceding claims,
**characterised in that**,
dusty goods such as cement, fine-grained hydrocarbons or titanium dioxide are filled.

11. Method according to one of the preceding claims,
**characterised in that**,
disruptions while measuring the weight (g) and/or the increase in weight (g/t) of the sack (8), which are triggered by the filling element (2) - preferably while the opening (31) of the filling element (2) lies below the filling limit (38) - are removed by filtering the signal of the measuring element (26).

12. Forming, filling and sealing machine, having at least the following features:
- a sack-forming device (13, 17, 18), wherein sacks (11) are formed from pieces of tubing,
- a filling device (2, 4, 5), wherein the sacks (8) are held and filled with a filling element (2),
- a sealing device (14), which reseals the opening (25) of the sack,
- a weighing device (26) for weighing the sacks (8)
- a control device, which is loaded with a control programme (p6 line 10 et seq.) in such a way that it carries out the following method:
- the control device monitors, at least in the course of a first time span (Z₁) during the filling process of the sack (8), the increase in weight of said sack (8) and provides an alarm signal if the increase in weight (g/t) lies outside a target region (S) for each unit of time,
**characterised in that**,
- the control device, in the course of a second time span (Z₂) during the filling process of the sack (8), does not use the signals of the weighing cells (26) for controlling and/or regulating the weight (g) of the sack (8),
- the control device controls the relative movement between the sack and the filling element in such a way that, at least in the course of a third time span (Z₃), the opening (31) of the filling element (2) lies below the filling limit (38) in the sack which is to be filled,
- the control device, at least in the course of a fourth time span (Z₄), while the sack is being filled, uses the signals of the weighing cells (26) to monitor the weight (g) of the sack, and,
- the control device, at least in the course of a fifth time span (Z₅), which lies at least partially within the fourth time span (Z₄), wherein the signals of the weighing cells (26) are used to monitor the weight (g) of the sack, controls the relative moment between the sack and the filling element in such a way that the opening (31) of the filling element (2) lies above the filling limit (38) in the sack (8) which is to be filled.

13. Data set for loading the control device of a suitable FFS (forming, filling and sealing) machine with control commands and/or software components to carry out the following method automatically:
- the control device monitors, at least in the course of a first time span (Z₁) during the filling process of the sack (8), the increase in weight of said sack (8) and provides an alarm signal if the increase in weight (g/t) lies outside a target region (S) for each unit of time,
**characterised in that**,
- the control device, in the course of a second time span (Z₂) during the filling process of the sack (8), does not use the signals of the weighing cells (26) for controlling and/or regulating the weight (g) of the sack (8),
- the control device controls the relative movement between the sack and the filling element in such a way that, at least in the course of a third time span (Z₃), the opening (31) of the filling element (2) lies below the filling limit (38) in the sack which is to be filled,
- the control device, at least in the course of a fourth time span (Z₄), while the sack is being filled, uses the signals of the weighing cells (26) to monitor the weight (g) of the sack, and,
- the control device, at least in the course of a fifth time span (Z₅), which lies at least partially within the fourth time span (Z₄), wherein the signals of the weighing cells (26) are used to monitor the weight (g) of the sack, controls the relative moment between the sack and the filling element in such a way that the opening (31) of the filling element (2) lies above the filling limit (38) in the sack (8) which is to be filled.

## Revendications

1. Procédé de mise en forme, de remplissage et de fermeture de sacs (8, 11), qui présente au moins les caractéristiques suivantes:
- la formation d'un sac (8, 11), les sacs (8, 11) étant formés à partir de morceaux de gaine souple,
- le remplissage d'un sac (8), lors duquel les sacs (8) sont maintenus et remplis à l'aide d'un organe de remplissage (2),
- la fermeture de l'ouverture du sac (25),
- la pesée des sacs (8),
- dans lequel, pendant un premier intervalle de temps (Z₁) au cours de l'opération de remplissage du sac (8), on procède à un contrôle de l'augmentation de son poids,
- et on met à disposition un signal d'alarme quand l'augmentation de poids par unité de temps (g/t) est extérieure à une plage cible (S),
**caractérisé en ce que**
- pendant un deuxième intervalle de temps (Z₂) au cours de l'opération de remplissage du sac (8), les signaux des cellules de pesage (26) ne sont pas utilisés pour le contrôle et/ou la régulation du poids (g) du sac (8),
- au moins pendant un troisième intervalle de temps (Z₃) l'embouchure (31) de l'organe de remplissage (2) se trouve en-dessous du niveau du produit à ensacher (38) dans le sac à remplir,
- au moins pendant un quatrième intervalle de temps (Z₄) pendant le remplissage du sac, les signaux des cellules de pesage (26) sont utilisés pour surveiller le poids du sac (g),
- et au moins pendant un cinquième intervalle de temps (Z₅), qui au moins partiellement se trouve à l'intérieur du quatrième intervalle de temps (Z₄) au cours duquel les signaux des cellules de pesage (26) sont utilisés pour la surveillance du poids du sac (g), l'embouchure (31) de l'organe de remplissage (2) se trouve au-dessus du niveau du produit à ensacher (38) dans le sac à remplir (8).

2. Procédé selon la revendication 1, **caractérisé en ce que** l'intervalle de temps (Z₁) pendant l'opération de remplissage, au cours duquel l'augmentation du poids (g/t) du sac (8) est contrôlée, recouvre la totalité de l'opération de remplissage.

3. Procédé selon la revendication 1, **caractérisé en ce que** l'intervalle de temps (Z₁) pendant l'opération de remplissage, au cours duquel l'augmentation du poids (g/t) du sac (8) est contrôlée, recouvre une certaine période à la fin de l'opération de remplissage.

4. Procédé selon la revendication 1, **caractérisé en ce que** l'intervalle de temps (Z₁) pendant l'opération de remplissage, au cours duquel l'augmentation du poids (g/t) du sac (8) est contrôlée, recouvre une période au début de l'opération de remplissage.

5. Procédé selon la revendication précédente, **caractérisé en ce que** l'augmentation du poids (g/t) du sac (8) fait l'objet d'une détermination volumétrique ou empirique pendant le deuxième intervalle de temps (Z₂).

6. Procédé selon la revendication précédente, **caractérisé en ce que** l'augmentation du poids (g/t) du sac (8) fait l'objet d'une détermination volumétrique pendant le deuxième intervalle de temps (Z₂), et que le dispositif de commande permettant la surveillance volumétrique du poids prend en compte la vitesse de rotation de la vis de l'organe doseur (2).

7. Procédé selon l'une des trois revendications précédentes, **caractérisé en ce que** le troisième intervalle de temps (Z₃), au cours duquel l'embouchure (31) de l'organe de remplissage (2) se trouve en-dessous du niveau du produit à ensacher (38) dans le sac à remplir, se trouve de préférence à l'intérieur du deuxième intervalle de temps (Z₂).

8. Procédé selon la revendication précédente, **caractérisé en ce que** la vitesse moyenne de remplissage (g/t) pendant le cinquième intervalle de temps (Z₅) est inférieure à la vitesse pendant le troisième (Z₃) et/ou le quatrième (Z₄) intervalle de temps.

9. Procédé selon l'une des deux revendications précédentes, **caractérisé en ce que** le cinquième intervalle de temps (Z₅) se trouve à la fin de l'opération de remplissage d'un sac (8).

10. Procédé selon l'une des revendications précédentes, **caractérisé en ce que** le remplissage porte sur des produits pulvérulentes tels que le ciment, des hydrocarbures à fine granulométrie ou du dioxyde de titane.

11. Procédé selon l'une des revendications précédentes, **caractérisé en ce que** les perturbations lors de la mesure du poids (g) et/ou de l'augmentation du poids (g/t) du sac (8), qui - de préférence pendant que l'embouchure (31) de l'organe de remplissage (2) se trouve en-dessous du niveau du produit à ensacher (38) - sont déclenchées par l'organe de remplissage (2), sont supprimées par un filtrage des signaux des organes de mesure (26).

12. Machine à mettre en forme, remplir et sceller, qui comprend au moins les caractéristiques suivantes:
- un dispositif de mise en forme de sacs (13, 17, 18), dans lequel des sacs (11) sont formés à partir de morceaux de gaine souple,
- un dispositif de remplissage (2, 4, 5), dans lequel les sacs (8) sont maintenus et remplis à l'aide d'un organe de remplissage (2),
- un dispositif de fermeture (14), qui referme l'ouverture (25) des sacs,
- un dispositif de pesée (26), pour peser les sacs (8),
- un dispositif de commande, qui reçoit un programme de commande (page 6, ligne 10 et suivantes) de façon à mettre en oeuvre la procédure suivante:
- le dispositif de commande contrôle, au moins pendant un premier intervalle de temps (Z₁) pendant l'opération de remplissage du sac (8), l'augmentation du poids de ce dernier, et met à disposition un signal d'alarme quand l'augmentation du poids (g/t) par unité de temps est extérieure à une plage cible (S),
**caractérisée en ce que**
- le dispositif de commande, pendant un deuxième intervalle de temps (Z₂) pendant l'opération de remplissage du sac (8), n'utilise pas les signaux des cellules de pesage (26) pour le contrôle et/ou la régulation du poids (g) du sac (8),
- le dispositif de commande pilote le mouvement relatif entre le sac et l'organe de remplissage, de telle sorte qu'au moins pendant un troisième intervalle de temps (Z₃) l'embouchure (31) de l'organe de remplissage (2) se trouve en-dessous du niveau (38) du produit à ensacher dans le sac à remplir,
- le dispositif de commande, pendant au moins un quatrième intervalle de temps (Z₄) pendant le remplissage des sacs, utilise les signaux des cellules de pesage (26) pour surveiller le poids des sacs (g),
- et le dispositif de commande, au moins pendant un cinquième intervalle de temps (Z₅), qui au moins partiellement se trouve à l'intérieur du quatrième intervalle de temps (Z₄), au cours duquel les signaux des cellules de pesage (26) sont utilisés pour la surveillance du poids des sacs (g), pilote le mouvement relatif entre le sac et l'organe de remplissage de telle sorte que l'embouchure (31) de l'organe de remplissage (2) se trouve au-dessus du niveau (38) du produit à ensacher dans le sac à remplir 8.

13. Ensemble de données destiné à être injecté dans le dispositif de commande d'une machine FFS, avec des instructions ou des éléments logiciels pour la mise en oeuvre automatisée de la procédure suivante:
- le dispositif de commande contrôle, au moins pendant un premier intervalle de temps (Z₁) pendant l'opération de remplissage du sac (8), l'augmentation du poids de ce dernier et met à disposition une signal d'alarme quand l'augmentation du poids (g/t) par unité de temps se trouve à l'extérieur d'une plage cible (S),
**caractérisé en ce que**:
- le dispositif de commande, pendant un deuxième intervalle de temps (Z₂) pendant l'opération de remplissage du sac (8), n'utilise pas les signaux des cellules de pesage (26) pour le contrôle et/ou la régulation du poids (g) du sac (8),
- le dispositif de commande pilote le mouvement relatif entre le sac et l'organe de remplissage, de telle sorte qu'au moins pendant un troisième intervalle de temps (Z₃) l'embouchure (31) de l'organe de remplissage (2) se trouve en-dessous du niveau (38) du produit à ensacher dans le sac à remplir,
- le dispositif de commande, pendant au moins un quatrième intervalle de temps (Z₄) pendant le remplissage des sacs, utilise les signaux des cellules de pesage (26) pour surveiller le poids des sacs (g),
- et le dispositif de commande, au moins pendant un cinquième intervalle de temps (Z₅), qui au moins partiellement se trouve à l'intérieur du quatrième intervalle de temps (Z₄), au cours duquel les signaux des cellules de pesage (26) sont utilisés pour la surveillance du poids des sacs (g), pilote le mouvement relatif entre le sac et l'organe de remplissage de telle sorte que l'embouchure (31) de l'organe de remplissage (2) se trouve au-dessus du niveau (38) du produit à ensacher dans le sac à remplir (8).
